# EUROPEAN PATENT SPECIFICATION

(11) **EP 2 516 545 B1**
(45) Date of publication and mention of the grant of the patent: **25.01.2017**
(21) Application number: 10798060.9
(22) Date of filing: 16.12.2010
(51) Int. Cl.: C08L 23/08

(54) **POLYOLEFIN COMPOSITION FOR MEMBRANES**
POLYOLEFINZUSAMMENSETZUNG FÜR MEMBRANEN
COMPOSITION POLYOLÉFINIQUE POUR MEMBRANES

(30) Priority: 22.12.2009 EP 09180427; 08.01.2010 US 335622 P
(43) Date of publication of application: 31.10.2012
(73) Proprietor: Basell Poliolefine Italia S.r.l., 20127 Milano (IT)
(72) Inventor: LUNGHI, Luca, I-44123 Ferrara (IT); PRADELLA, Fiorella, I-Carbonara di Po (MN) (IT); MONTALETTI, Ambra, I-40062 Molinella (IT); COSTANTINI, Enrico, I-44121 Ferrara (IT)
(74) Representative: Colucci, Giuseppe
(86) International application number: PCT/EP2010/069930
(87) International publication number: WO 2011/076664

(56) References cited:
- EP-A1- 1 302 508
- EP-A2- 0 184 191
- WO-A1-2009/077481
- US-B1- 6 541 547

## Description

The present invention relates to a polyolefin composition for membrane suitable for use in waterproofing applications. In particular, the present invention relates to compositions for use in geomembranes, for water containment and conveyance, pool liners, rainstorm and fish pond liners, snow lagoons, water and industrial reservoirs, food related lining etc. Such membrane comprises at least one layer comprising a heterophasic composition of olefin polymers and an additives package.

It is known the use of PVC membranes for waterproofing applications that are known to have good flexibility. Such membranes have typically some limitation for use in certain applications due to environmental or food contact issues (plasticizer release) and increasing requirements for durable aesthetic appearance and mechanical resistance.

Multilayer membranes made of or comprising polyolefin materials are also known in the art providing generally improved mechanical resistance.

For example Polyethylene membranes are known for use as geomembranes. HDPE membranes are known to exhibit poor stress cracking and insufficient flexibility for certain applications. Flexibility is improved with the use LLDPE membranes that are more flexible but generally having high value of coefficient of linear thermal expansion (CLTE) compromising dimensional stability and limitation in aesthetic appearance of the LLDPE liners.

Additives packages typically comprising antioxidant and U.V. protective additives are also known to preserve the properties of the polymers and of the membranes thereof obtained even after long-term exposure to extreme conditions. The additives package has to be low extractable in order to protect the polymer against U.V. light and oxidation. The depletion of the additives from the membrane is achieved by the effect of water or liquids whilst the oxidation of the polymer structure is due to the environmental high temperature exposure. US 6541547 disclose a selected three-component mixture of additives comprising a phosphite or phosphonite, a phenolic antioxidant and a certain group of sterically hindered amines (HALS) particularly suitable as stabilizer for polyolefin mouldings which are in permanent contact with extracting media. The amount of phenolic antioxidant is disclosed from 0.02-0.5% based on weight of the polyolefin.

The applicant has now found that by using selected materials as polymeric base and specific combinations of additives in specific amounts, a particularly advantageous polyolefin composition suitable for membrane is obtained combining mechanical resistance, dimensional stability and durability. The polyolefin composition according to the invention is particularly suitable for geomembrane application.

A further object of the present invention is thus a membrane and particularly a geomembrane comprising the polyolefin polyolefin composition of the invention having excellent balance of tensile properties and tear resistance, low surface stickiness and good thermal weldability and durability. An added advantage is that the composition according to the invention has a low value of CLTE. Said property imparts high dimensional stability to the final membranes reducing the occurrence of membrane wrinkles due to temperature seasonal variation or service conditions.

Thus the present invention provides a polyolefin composition suitable for the production of membranes comprising:
(I) a composition comprising
   a) 10-40 wt%, preferably 20-40wt%, more preferably 25-38wt%, of a propylene homopolymer, or a copolymer of propylene with ethylene or a CH₂=CHR α-olefin, where R is a C₂-C₈ alkyl radical, or a copolymer of propylene with ethylene and said CH₂=CHR α-olefin, said copolymers containing over 85wt% of propylene, and having a fraction insoluble in xylene at room temperature greater than 80wt%; and
   b) 60-90wt%, preferably 60-80wt%, more preferably 62-75wt%, of one or more copolymers selected from (b1) copolymers of ethylene with propylene or a CH₂=CHR α-olefin, where R is a C₂-C₈ alkyl radical, and optionally minor quantities of a diene, and (b2) copolymers of ethylene with propylene and said α-olefin, and optionally minor quantities of a diene, said copolymers containing ethylene in a quantity lower than 40wt%, preferably from 20 to 38wt%, and having solubility in xylene at room temperature greater than 70wt%, preferably greater than 80wt%;
   the amounts of (a) and (b) being referred to the total weight of (a) and (b); and
(II) an additives package (stabilizing composition) comprising
   (i) one or more organic phosphites and /or phosphonites;
   (ii) one or more phenolic antioxidant, consisting of an hindered phenol compound;
   (iii) one or more HALS (Hindered Amine Light Stabilizer);
      and optionally
   (iv) one or more epoxidized fatty acid ester.
   wherein the ratio (iii)/(ii), that is the ratio of the amount of HALS (iii) to the amount of phenolic antioxidant (ii), is equal to or less than 1; and the weight amount of additives package (II) is from 0.5 to 2wt% referred to the weight of the polyolefin composition.

The additives package (II) is preferably characterized by at least one component being low extractable in water based-solvents. Low extractable indicate a solubility in water of equal to or less than 0.01 wt%.

The amounts of additives (i), (ii) and (iii) and optionally (iv) are preferably within the following ranges referred to the weight of the polyolefin composition:
(i) from 0.05 to 0.6 wt%, preferably from 0.1 to 0.3 wt%
(ii) from 0.50 - 1wt%, preferably from 0.55 - 1wt%
(iii) from 0.10 to 1 wt%, preferably from 0.30 to 1 wt% and if present
(iv) is from 0.02-0.6 wt%, preferably from 0.05 to 0.5 wt%, more preferably from 0.1 to 0.3 wt%

The ratio (iii)/(i), that is the ratio of the amount of HALS (iii) to the amount of phenolic antioxidant (ii), is preferably equal to or less than 0.8, more preferably from 0.4 to 0.8, even more preferably from 0.5 to 0.8.

Particularly preferred are the polyolefin compositions wherein the additives package (II) comprises at least two HALS (iii) having different molecular weight. It is particularly advantageous when the fraction of relatively low molecular weight HALS (Mw equal to or lower than 2000) is equal to or higher than 20wt%, even more preferably when it is from 30 to 60 wt% referred to the weight of component (iii).

The geomembrane according to the invention exhibit a percent reduction of the Oxidation Induction Time (OIT), measured as described herein below in the experimental part, equal to or lower than 35%, preferably lower than 30%, more preferably lower than 20% with respect to the base value measured before the immersion test. The base OIT value is typically and preferably higher than 115, preferably higher than 120.

In the present description room temperature refers to a temperature around 23°C.

The polymeric component (I) is typically a heterophasic composition comprising an elastomeric ethylene copolymer (b) regularly distributed inside a semicrystalline PP homo or copolymer matrix (a). In the heterophasic composition (I) it is preferable that component (a) be a copolymer instead of a homopolymer. Preferably the propylene content in the copolymers of component (a) is from 90 to 99% by weight.

The fraction insoluble in xylene at room temperature of the polymers of component (a) preferably ranges from 85 to 99wt% in the case of homopolymers, and from 85 to 95wt% in the case of copolymers.

Preferably the heterophasic composition (I) has flexural modulus determined according to ISO 178 of equal to or less than 150 MPa, preferably from 15 to 80 MPa .

A membrane wherein the heterophasic composition (I) contains at least 20% by weight of component (a) is particularly preferred, because of its superior mechanical properties. Examples of the above mentioned CH₂=CHR α-olefins where R is a C₂-C₈ alkyl radical, present in the heterophasic composition (I) and in copolymers (i), (ii) and (iii), are butene-1, pentene-1, 4-methyl-pentene-l, hexene-1, and octene-1. Butene-1 is preferred.

Whenever present, the amount of diene in component (b) of the heterophasic composition (I) is preferably from 1 to 10% by weight with respect to the total weight of component (b). Examples of dienes are butadiene, 1,4-hexadiene, 1,5-hexadiene, and ethylidene-1-norbornene.

Examples of heterophasic composition (I) are described in published European patent application EP-A-0472946 and in WO03/011962, whose content is incorporated in this patent application for reference purposes.

The heterophasic composition (I) can be prepared by mixing the previously prepared components (a) and (b) in the fluid state, i.e., at temperatures greater than their softening or melting point, or, more preferably, by sequential polymerization in two or more stages. It is preferred to carry out the polymerization processes for the preparation of the single components or of the heterophasic composition (sequential polymerization) in the presence of a highly stereospecific Ziegler-Natta catalyst. In particular the catalyst system used comprises (1) a solid catalyst component containing a titanium compound and an electron-donor compound supported on magnesium chloride, and (2) an Al-containing cocatalyst and optionally (3) an electron-donor compound (external donor).

The solid catalyst component (1) contains as electron-donor a compound generally selected among the ethers, ketones, lactones, compounds containing N, P and/or S atoms, and mono- and dicarboxylic acid esters.

Particularly suited among the said electron-donor compounds are phthalic acid esters and succinic acid esters.

Suitable succinic acid esters are represented by the formula (I): 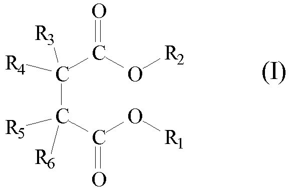 wherein the radicals R₁ and R₂, equal to or different from each other, are a C1-C20 linear or branched alkyl, alkenyl, cycloalkyl, aryl, arylalkyl or alkylaryl group, optionally containing heteroatoms; the radicals R₃ to R₆ equal to or different from each other, are hydrogen or a C1-C20 linear or branched alkyl, alkenyl, cycloalkyl, aryl, arylalkyl or alkylaryl group, optionally containing heteroatoms, and the radicals R₃ to R₆ which are joined to the same carbon atom can be linked together to form a cycle.

R₁ and R₂ are preferably C1-C8 alkyl, cycloalkyl, aryl, arylalkyl and alkylaryl groups. Particularly preferred are the compounds in which R₁ and R₂ are selected from primary alkyls and in particular branched primary alkyls. Examples of suitable R₁ and R₂ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which R₃ to R₅ are hydrogen and R₆ is a branched alkyl, cycloalkyl, aryl, arylalkyl and alkylaryl radical having from 3 to 10 carbon atoms. Another preferred group of compounds within those of formula (I) is that in which at least two radicals from R₃ to R₆ are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is R₃ and R₅ or R₄ and R₆ are particularly preferred. Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-containing compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical). The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in suspension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

Other catalysts that may be used are metallocene-type catalysts, as described in USP 5,324,800 and EP-A-0 129 368; particularly advantageous are bridged bis-indenyl metallocenes, for instance as described in USP 5,145,819 and EP-A-0 485 823. Another class of suitable catalysts are the so-called constrained geometry catalysts, as described in EP-A-0 416 815 (Dow), EP-A-0 420 436 (Exxon), EP-A-0 671 404, EP-A-0 643 066 and WO 91/04257. These metallocene compounds may be used in particular to produce the component (b).

The above mentioned sequential polymerization process for the production of the heterophasic composition (I) comprises at least two stages, where in the first stage propylene is polymerized, optionally in the presence of ethylene and/or said α-olefin as comonomer(s), to form component (a), and in the subsequent stage(s) mixtures of ethylene/propylene and/or an other α-olefin and optionally a diene are polymerized to form component (b). The polymerization processes are carried out in either liquid, gas, or liquid/gas phase. The reaction temperature in the various stages of polymerization can be equal or different, and generally ranges from 40 to 90°C, preferably from 50 to 80°C for component (a), and from 40 to 60°C for component (b).

The pressure of a single stage, if carried out in liquid monomer, is the one which competes with the vapor pressure of the liquid propylene at the operating temperature used, and is modified by the overpressure of the monomer(s) and the hydrogen used as molecular weight regulator, and possibly by the vapor pressure of the small quantity of inert diluent used to feed the catalyst mixture.

The polymerization pressure, if done in liquid phase, indicatively can be from 5 to 30 atm. Examples of sequential polymerization processes are described in the said published European patent application EP-A-0472946 and WO03/011962.

The melt flow rate MFR values, of the heterophasic composition (I) is generally from 0.1 to 100 g/10 min, preferably from 0.2 to 50 g/10 min, even more preferably from 0.3 to 10 g/10min measured at 230°C/2.16 kg according to ASTM D1238 (technically equivalent to ISO 113-1991).

The desired MFR values for the heterophasic composition (I) to be used in the composition for membrane according to the invention, can be obtained directly in polymerization, by adequately regulating the molecular weight regulator (hydrogen, for example), or can be obtained by subjecting said polymer components or compositions to visbreaking. Said polymer chain scissioning or visbreaking is carried out by using well known techniques. One of them consists of using peroxides which are added in sufficient quantities to the polymer composition to provide the desired degree of visbreaking, upon heating, generally in an extruder.

The peroxides which are most conveniently used in the polymer visbreaking process have a decomposition temperature preferably ranging from 150°C to 250°C. Examples of said peroxides are di-tert-butyl peroxide, dicumyl peroxide, 2,5-dimethyl-2,5-di(tert-butylperoxy)hexyne and Luperox 101 2,5-dimethyl-2,5-di(tert-butylperoxy)hexane, all of which are commercially available.

The quantity of peroxide necessary for the visbreaking process preferably ranges from 0.001 to 1.5% by weight of the polymer, more preferably from 0.002 to 0.6wt%.

The organic phosphites (i) that are used in the additives package (II) according to the present invention are preferably selected among compounds with the following general formulas: 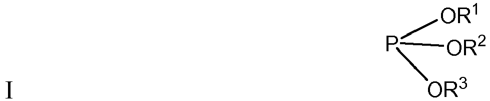 where R1, R2, R3, equal or different, are alkyl, aryl, or arylalkyl radicals having 1-18 carbon atoms; 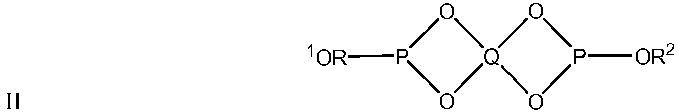 where R1 and R2, equal or different, are radicals having the above-mentioned meaning; Q is a tetravalent alkyl radical; 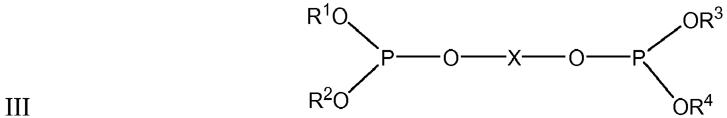 where R1, R2, R3, R4, equal or different, are radicals having the significance already indicated for radicals R, X is a bivalent alkyl, aryl, or arylalkyl radical.

Examples or organic phosphites comprised in the general formula I are described in US Patents No. 4,187,212 and No. 4,290,941.

Specific examples of compounds included in general formulas I, II, III are: tris(2,4-di-ter-butylphenyl)phosphite sold by Ciba specialty Chemicals under the tradename Irgafos 168; distearyl pentaerythritol diphosphite sold by Chemtura under the tradename Weston 618; 4,4 min -butylidenebis(3-methyl-6-ter-butylphenil-ditridecyl)phosphite sold by Adeka Argus Chemical under the tradename Mark P; tris(monononyl-phenyl)phosphite; bis(2,4-di-ter-butyl)pentaerythritol diphosphite, sold by Chemtura under the tradename Ultranox 626.

The organic phosphonites that can be used, alternatively, as additives (i) in the additives package (II) according to the present invention are preferably selected among the compounds of general formula: 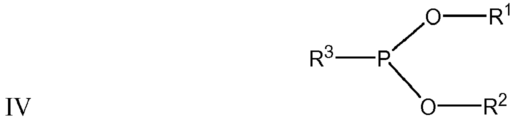 where R1, R2, R3, equal or different, are alkyl, aryl, or arylalkyl radicals having 1-18 carbon atoms.

Alternatively, and this is preferred, the R3 radical can be substituted by a group 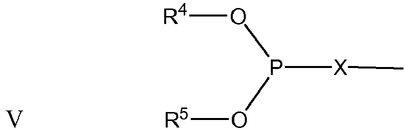 where R4 and R5, equal or different, are radicals having the above indicated significance for the R radicals, and X is a bivalent alkyl, aryl, or arylalkyl radical.

Examples or organic phosphonites included in general formula IV, which can conveniently be used according to the present invention, are described in GB patent No. 1,372,528.

The organic phosphites and phosphonites are generally used to inhibit degradation and oxidation of polyolefins in the molten state (process stabilizers).

The phenolic antioxidants (ii) that are used in the additives package (II) according to the present invention are preferably selected among hindered phenol compounds with the following formulas: 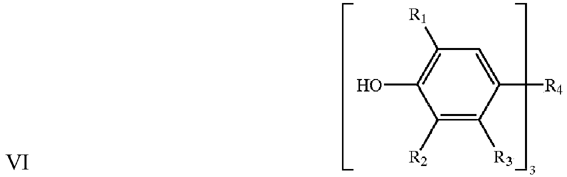 in which R1 and R2 is tert-butyl, R3 is hydrogen, and R4 is 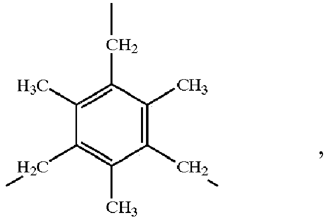 or 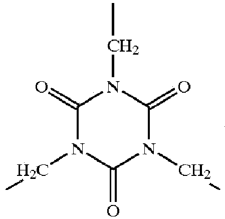 or in which component (ii) is 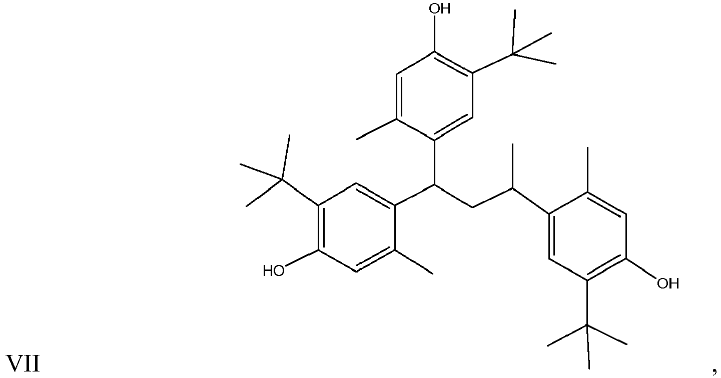 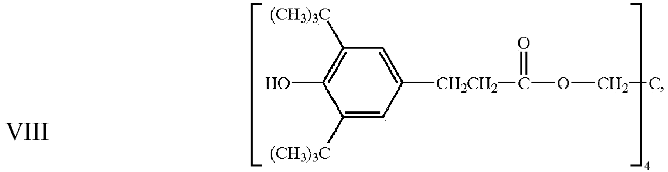 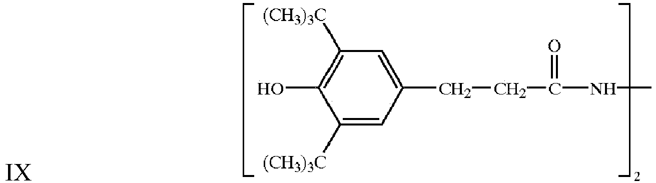 or

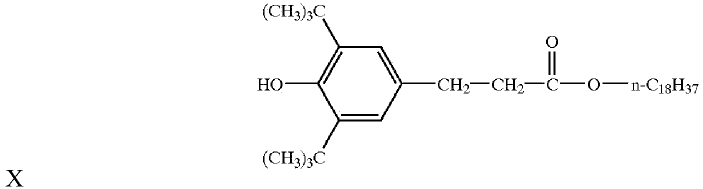

The above preferred phenolic antioxidants are:
(VI) 1,3,5-trimethyl-2,4,6-tris(3,5-di-ter-butyl-4-hydroxybenzyl)benzene, 1,3,5-tris (3,5-di-ter-butyl-4-hydroxybenzyl)-s-triazine-2,4,6(1H,3H,5H) trione; sold by Ciba Specialty Chemicals under the following tradenames: Irganox 3114; Irganox 1330;
(VII) 4-[4,4-bis(4-hydroxy-2-methyl-5-tert-butyl-phenyl)butan-2-yl]-5-methyl-2-tert-butyl-phenol, manufactured by Imperial Chemical Industries Limited and sold by Seal Sands Chemical under the tradename Topanol CA;
(VIII) pentaerythritil-tetrakis[3(3,5-di-ter- butyl-4-hydroxyphenyl)propionate], sold by Ciba specialty Chemicals under the tradename Irganox 1010;
(IX) 2',3-[[3-[3,5-di-tert-butyl-4-hydroxyphenyl]propionyl]]propionohydrazide, sold by Ciba Specialty Chemicals under the tradename Irganox MD 1024;
(X) Octadecyl-3-(3,5-tert.butyl-4-hydroxyphenyl)-propionate, sold by Ciba Specialty Chemicals under the tradename Irganox 1076;

The HALS (iii), which are also used in the additives package (II) according to the present invention, are amine compounds with steric hindrance of the aminic function, which are generally used as stabilizers for polyolefins in the solid state against oxidation induced by light.

The HALS (iii) used according to the present invention are monomeric or oligomeric compounds containing, in the molecule, one or more substituted piperidine groups having the following general formula: 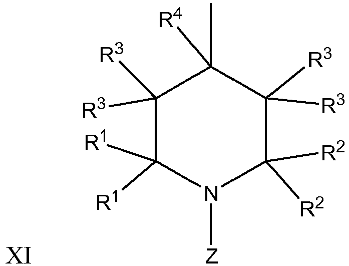 where the R1 radicals, equal or different, are C1-C4 alkyl radicals, or tetramethylpiperidine radicals, or the alkyl radicals form with the piperidine carbon atoms to which they are linked a C5-C9 cycloalkyl radical; the R2 radicals, equal or different, are hydrogen or C1-C18 alkyl radicals, C7-C18 arylalkyl radicals, or the alkyl radical form with the piperidine carbon atoms to which they are linked a C5-C10 cycloalkyl radical; the R3 radicals, equal or different, are hydrogen, or C1-C18 alkyl radicals or C7-C18 arylalkyl radicals; the R4 radical is hydrogen, or a C1-C8 alkyl radical, or a benzyl radical, or an heterocyclic ring including the carbon at the 4-position of the piperidine ring; Z is hydrogen, or a C1-C18 alkyl, C1-C12 alkylene, C3-C12 alkenyl, C3-C5 alkynyl, C7-C18 arylalkyl, C2-C4 acyl, C2-C18 alkanoyl, C3-C18 alkoxyalkyl, C3-C18 alkenoyl, oxylic, cyanomethyl, xylylenyl radical, or a radical having a 1 to 4 valence and containing from 1 to 4 hydroxyl groups and, optionally, ether, ester, or heterocyclic groups, being the valences of said radical linked to the nitrogen of piperidine groups, or a bivalent radical containing one or more ester or amide groups, or a 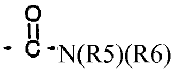 radical where R5 and R6 are hydrocarbon radicals.

Preferably Z is a C1-C12 alkyl radical, or a C3-C8 alkenyl, C7-C11 aralkyl radical, or a bivalent radical containing one or more ester groups, being the valences of said radicals linked to the nitrogen atom of piperidine groups.

When the R4 radical is an heterocyclic ring including the carbon at the 4-position of the piperidine ring the product of the reaction of the HALS with epichlorhydrin can also be used as component (iii) according to the present invention.

Specific examples of preferred HALS according to the present invention are compounds having the following formula: 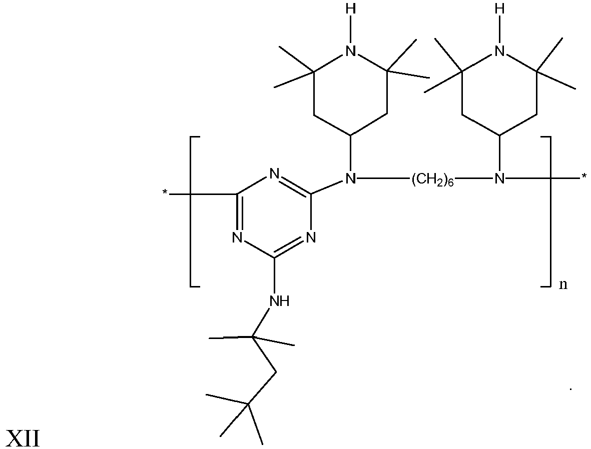 where n generally varies from 2 to 20. A compound of this type is Poly[[6-(1,1,3,3-tetramethylbutyl)imino-1,3,5-triazine-2,4-diyl][(2,2,6,6-tetramethyl-4-piperidyl)imino]]hexamethylene[(2,2,6,6-tetramethyl-4-piperidyl)imino]] sold by Ciba Specialty Chemicals under the tradename Chimassorb 944 (Molecular weight: 2000-3100, melting range 100-135°C. 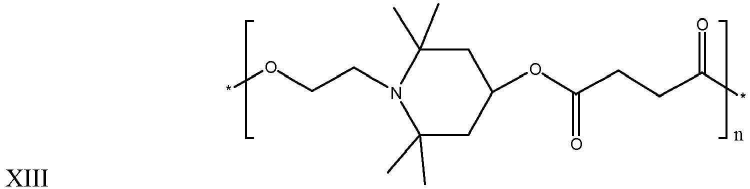 where n generally varies from 2 to 20.

A compound of this type is sold by Ciba specialty Chemicals under the tradename Tinuvin 622 (Molecular weight: 3100-4000, melting range 50-70°C). 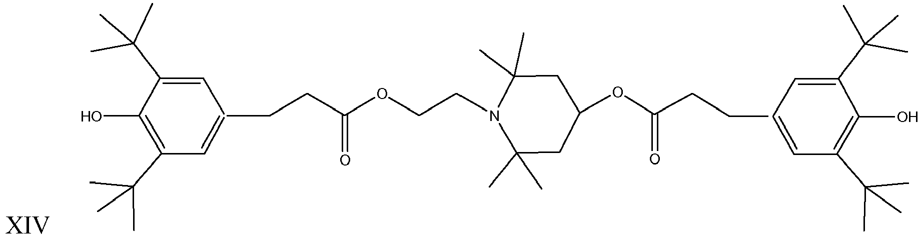 that is 1,[2-[3-(3,5-di-t-butyl-4-hydroxyphenyl)propionyloxy]ethyl]-4-[3-(3,5-di-t-butyl-4-hydroxyphenyl)propionyloxy]-2,2,6,6-tetramethyl piperidine sold by Sankyo Co., Ltd under the tradename SANOL® LS-2626 (Molecular weight: 722, Melting range : 135-140°C). A reaction product of the compound the formula 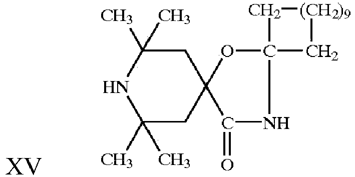 with epichlorohydrin (oligomeric amine) sold by Hoechst under the tradename Hostavin N30 (Molecular weight: 1500, Melting range: 100-130°C).

The epoxidized fatty acid eters (iv) that can be optionally used in the stabilizing additives package according to the invention are epoxidized oleochemicals such as epoxidized glycerol fatty esters ESO (Epoxidized Soybean Oil) and ELO (Epoxidized Linseed Oil) known for use as plasticizer in plastic materials (e.g. replacing phthalates in PVC). The addition of this further preferred additive in the amounts specified produces an additional surprising advantage in term of stabilization. This, without being bound to any theory, can be correlated with a compatibilizing effect or increased solubility of the additives in the polymer matrix.

Further additives commonly used to stabilize polyolefins, particularly Ca, Mg, Zn stearates and mineral oils such as paraffinic oils can also be used in the preparation of the polyolefin compositions and membranes according to the invention.

All the polymer components and compositions used for the membrane of the present invention can also contain other additives commonly employed in the art, such as nucleating agents, colorants and fillers.

As above said a further object of the present invention is a membrane, particularly a geomembrane comprising the polyolefin composition according to the invention. The membrane according to the invention is preferably a monolayer membrane but it can be also a multilayer structure. For example it can be a membrane comprising at least one layer made of a polyolefin composition according to the invention. A specific example can be a two layer membrane comprising a base layer (A) according to the invention and a top layer (B) such as the one described in the international application n. WO 2009/0077481. Other layers, like in particular reinforcing layers, may be present.

Such reinforcing layers can be made of polyolefin materials, like propylene homopolymers and copolymers, or polyethylene terephthalate (PET). In particular they can be woven or nonwoven fabrics made of fibres comprising the said polyolefin materials.

Preferred thickness values for a monolayer membrane according to the invention are of from 1000 to 3500 µm.

When a structure is considered with a base layer (A) according to the invention and a top layer (B), the preferred thickness values for the base layer (A) are of 500 µm or more.

The membrane of the present invention can be prepared with the apparatuses and processes well known in the relevant art, in particular by extrusion, coextrusion and lamination. Particularly the monolayer membranes can be blown, slot-die extruded or calendered into sheets

Extrusion and co-extrusion are carried out preferably with a melt temperature profile from 185 to 210 °C, and a head temperature from 200 to 220 °C.

Also membrane according to the invention can be blown films and bioriented films (BOPP) comprising the composition according to the invention.

In the cast film process, the molten polymer materials are forced through a long, thin, rectangular shaped slit. The extrudate has the shape of a thin film. The film is cooled before winding-up.

As previously said, the membrane of the present invention can be in particular a membrane for use in geomembrane applications, namely a geomembrane, application in roofing, namely a roofing membrane is not excluded.

The following examples are given to illustrate, not to limit, the present invention. Percentages are by weight unless otherwise indicated. Molecular weights are number average unless otherwise indicated.

### Materials used in the examples

Heco-1 is the heterophasic composition (I) used to prepare the membrane in the examples.

Heco-1 is a heterophasic polyolefin composition having a MFR value of about 0.6 g/10 min., flexural modulus of 20 MPa and a content of fraction soluble in xylene at room temperature of 76% by weight, and comprising (weight percentages) 17wt% of a crystalline copolymer (A) of propylene with 3.3wt% of ethylene; and 83wt% of a copolymer (B) of propylene with ethylene containing 32wt% of ethylene, having solubility in xylene at room temperature of 90% by weight.

The intrinsic viscosity of the fraction soluble in xylene at room temperature of the total composition is of 2.8 dl/g determined in tetrahydronaphthalene at 135°C.

Heco-1 has been prepared by a sequential polymerization process in the presence of a stereospecific Ziegler-Natta catalyst supported on magnesium dichloride.

### Examples 1 to 4 and 1b and Comparative Examples 1 and 2 (c1, c2)

Polyolefin compositions containing the stabilizing additives package as specified in table 1 were prepared in a Leistritz Micro 27 twin screw extruder (Size= 27 mm; L/D=40; Max RPM=500; Capacity=5-40 Kg/h, Feeding: 3 ports (main+ 2 side feeders); 4 loss in weight feeders). Extrusion conditions were as follows:
- rotation speed of 200 rpm
- melt temperature of 237°C

Membrane samples having nominal thickness of 1 mm, have been manufactured, starting by the prepared compositions, on a Brabender 30 mm equipped with a flat die (140mm) under the following conditions:
- throughput 6-8 Kg/h
- rotation speed 150 rpm
- melt temperature 245°C
- head pressure 40 bar

The OIT values and mechanical properties of the so obtained membranes are also reported in Table 1.

The following test methods were used to measure the specified properties.

### - Oxidation Induction Time (OIT)

Specimens of 120x150 mm were cut out from each membrane sample and were aged by water immersion at 85±1 °C for 6 weeks to speed up the additives depletion. Water immersion ageing was followed by oven ageing at 120°C to speed up the oxidative effect. Specimens for each membrane composition were taken out and tested every week till the test failure.

The "oxidation induction time" (OIT) is the time between the exposition to oxygen of a polymer sample and the beginning of the oxidative reaction.

OIT procedure: a sample of each specimen of 1.0±0.2 grams was weighted and introduced in a glass tube test vessel connected to a vacuum line and placed on a heat oil bath (200°C) for 15 minutes. Oxygen was then introduced in the vessel in the pressure range of 1250±30mbar. The vessel was then isolated from the oxygen line and the variation in pressure inside the vessel was recorded as a function of time. The recorder shows an initial steady signal and subsequent changing slope due to a rapid absorption of oxygen by the sample due to the oxidation reaction. The intersection point of the two tangents of the curve gives the oxidation induction time (OIT). The final value in minutes is the average of three measurements. Samples with OIT equal to or less than 12 min have been judged failed.

### - Tensile properties (Elongation at break and Stress at break)

Tensile properties were measured according to ISO 527-5A, at a deformation speed of 500 mm /min. The samples have been aged before testing tensile properties by water immersion at 85 ±1°C for 10 weeks, followed by oven ageing at 120°C. The samples were taken out of the oven and tested every 2 weeks till failure of the sample. The samples were considered failed when they had less than 50% of retained property.

**Table 1**

| **Examples** | | | | **c1** | **c2** | **ex 1b** | **ex.1** | **ex.2** | **ex.3** | **ex.4** |
|---|---|---|---|---|---|---|---|---|---|---|
| **HETEROPHASIC COMPOSITION (I)** | | | | | | | | | | |
| Heco-1 | wt% | | | 99.03 | 98.75 | 98.45 | 98.25 | 98.45 | 98.5 | 98.55 |

| **ADDITIVES PACKAGE (II)** | | | | | | | | | | |
|---|---|---|---|---|---|---|---|---|---|---|
| **phosphite phosphonite (i)** | | | | | | | | | | |
| IRGAFOS 168 | wt% | | 646 | 0.15 | 0.25 | 0.15 | 0.15 | 0.15 | 0.15 | 0.15 |
| **phenolic antioxidant (ii)** | | | | | | | | | | |
| TOPANOL CA | wt% | Insol. | 544 | | | | | 0.3 | | |
| IRGANOX MD 1024 | wt% | <0.01 | 553 | | | | | | 0.15 | 0.15 |
| IRGANOX 1010 | wt% | <0.01 | 1178 | 0.15 | 0.4 | 0.2 | 0.2 | 0.2 | 0.2 | 0.2 |
| IRGANOX 1076 | wt% | <0.01 | 531 | | | 0.3 | 0.3 | 0.3 | 0.1 | 0.1 |
| IRGANOX 1330 | wt% | ≤0.01 | 775 | | | 0.3 | 0.3 | | 0.3 | 0.3 |
| **HALS (iii)** | | | | | | | | | | |
| TINUVIN 622 LD | wt% | <0.01 | 3100-4000 | 0.25 | | 0.25 | 0.25 | 0.25 | 0.25 | 0.25 |
| CHIMASSORB 944 LD | wt% | <0.01 | 2000-3000 | 0.25 | 0.5 | 0.25 | 0.25 | 0.25 | | |
| HOSTAVINN30 | wt% | | 1500 | | | | | | 0.25 | |
| SANOL LS-2626 | wt% | | 722 | | | | | | | 0.2 |
| **epoxidized oleochemical (iv)** | | | | | | | | | | |
| EDENOL D-82 | wt% | Insol. | 935 | | | | 0.2 | | | |

| **FURTHER ADDITIVES** | | | | | | | | | | |
|---|---|---|---|---|---|---|---|---|---|---|
| CA STEARATE - M | wt% | | | 0.12 | 0.05 | 0.05 | 0.05 | 0.05 | 0.05 | 0.05 |
| OB 22AT oil | wt% | | | 0.05 | 0.05 | 0.05 | 0.05 | 0.05 | 0.05 | 0.05 |

| **PROPERTIES OF THE POLYOLEFINCOMPOSITION AND MEMBRANE** | | | | | | | | | | |
|---|---|---|---|---|---|---|---|---|---|---|
| HALS total amount | wt% | | | 0.5 | 0.5 | 0.5 | 0.5 | 0.5 | 0.5 | 0.45 |
| Phenolic total amount | wt% | | | 0.15 | 0.4 | 0.8 | 0.8 | 0.8 | 0.75 | 0.75 |
| Phosphite total amount | wt% | | | 0.15 | 0.25 | 0.15 | 0.15 | 0.15 | 0.15 | 0.15 |
| Tot. amount (i)+(ii)+(iii)+(iv) | wt% | | | 0.80 | 1.15 | 1.45 | 1.65 | 1.45 | 1.40 | 1.35 |
| HALS/phenolic ratio | | | | 3.33 | 1.25 | 0.63 | 0.63 | 0.63 | 0.67 | 0.60 |
| | | | | | | | | | | |
| OIT (200°C) | min | | base | 85 | 125 | 187 | 175 | 190 | 140 | 116 |
| | | **after 6week immers.** | | 11 | 50 | 130 | 130 | 150 | 120 | 95 |
| OIT reduction after immersion | % | | | 87 | 60 | 31 | 26 | 21 | 14 | 18 |
| | | **after oven ageing** | | | | | | | | |
| | min | | 1 st week | | 10 | 105 | 120 | 140 | 112 | 86 |
| | min | | 2nd week | | | 80 | 103 | 120 | 110 | 75 |
| | min | | 3rd week | | | 65 | 82 | 110 | 105 | 67 |
| | min | | 4th week | | | 50 | 62 | 90 | 96 | 60 |
| | min | | 5th week | | | 22 | 50 | 68 | 85 | 55 |
| | min | | 6th week | | | 10 | 37 | 45 | 80 | 50 |
| | min | | 7th week | | | | 30 | 35 | 60 | 43 |
| | min | | 8th week | | | | 29 | 25 | 60 | 40 |
| | min | | 9th week | | | | 20 | 20 | 59 | 40 |
| | min | | 10th week | | | | 20 | 17 | 47 | 35 |
| | min | | 11th week | | | | 11 | 10 | 40 | 30 |
| | min | | 12th week | | | | | | 40 | ... |
| | min | | 13th week | | | | | | 40 | ... |

| **Examples** | | | | | **c1** | **c2** | **ex.1** | **ex.2** | **ex.3** | **ex.4** |
|---|---|---|---|---|---|---|---|---|---|---|
| Elongation at break | | | | base | 741 | 820 | 730 | 730 | 760 | 745 |
| | | | | after 10 week immers. | 875 | 718 | 710 | 715 | 720 | 728 |
| | | | | After oven ageing | | | | | | |
| | | | | 3rd week | 747 | 735 | 780 | 782 | 720 | 750 |
| | | | | 5th week | 570 | 560 | 621 | 790 | 700 | 470 |
| | | | | 7th week | 729 | 754 | 770 | 680 | 780 | 740 |
| | | | | 9th week | 725 | 710 | 753 | 760 | 740 | 760 |
| | | | | 11th week | 750 | 775 | 770 | 680 | 780 | 740 |
| | | | | 13th week | 230 | 640 | 700 | 720 | 690 | 670 |
| | | | | 16th week | | 660 | 760 | 700 | 715 | 765 |
| | | | | 19th week | | 700 | 820 | 950 | 790 | 780 |
| | | | | 21st week | | 160 | 760 | 830 | 725 | 780 |
| | | | | 24th week | | | 830 | 670 | 810 | 810 |
| | | | | 26th week | | | 890 | 50 | 860 | 890 |
| | | | | 28th week | | | 530 | | 720 | 740 |
| | | | | 30th week | | | 615 | | 765 | 765 |
| | | | | 32nd week | | | 265 | | 810 | 750 |
| | | | | 34th week | | | | | 950 | 840 |
| | | | | 36th week | | | | | 780 | 790 |
| | | | | 39th week | | | | | 800 | 830 |
| | | | | 42nd week | | | | | 775 | 280 |
| | | | | 45th week | | | | | 800 | |
| | | | | 48th week | | | | | 850 | |
| | | | | 51 st week | | | | | 320 | |
| Stress at break (MPa) | | | | base | 22.0 | 22.7 | 19.5 | 21.1 | 20.9 | 21.2 |
| | | | | after 10 weeks immers. | 19.6 | 21.7 | 19.9 | 19.2 | 20.0 | 19.2 |
| | | | | After oven ageing | | | | | | |
| | | | | 3rd week | 24.0 | 23.6 | 25.2 | 25.3 | 21.7 | 24.3 |
| | | | | 5th week | 16.4 | 16.0 | 17.4 | 24.5 | 19.8 | 13.0 |
| | | | | 7th week | 21.2 | 21.4 | 23.8 | 18.9 | 24.1 | 22.4 |
| | | | | 9th week | 21.1 | 19.5 | 21.2 | 21.2 | 20.6 | 21.5 |
| | | | | 11th week | 21.4 | 21.9 | 22.6 | 19.1 | 23.1 | 21.7 |
| | | | | 13th week | 6.8 | 15.7 | 19.8 | 19.8 | 19.7 | 19.4 |
| | | | | 16th week | | 17.3 | 20.7 | 18.6 | 19.4 | 21.7 |
| | | | | 19th week | | 16.5 | 22.9 | 21.1 | 23.8 | 23.1 |
| | | | | 21st week | | 7.8 | 20.3 | 20.7 | 19.4 | 18.9 |
| | | | | 24th week | | | 20.7 | 13.8 | 22.6 | 21.5 |
| | | | | 26th week | | | 18.0 | 4.4 | 19.9 | 21.0 |
| | | | | 28th week | | | 10.9 | | 18.6 | 18.9 |
| | | | | 30th week | | | 13.2 | | 21.5 | 20.2 |
| | | | | 32nd week | | | 9.6 | | 22.4 | 18.3 |
| | | | | 34th week | | | | | 20.7 | 16.3 |
| | | | | 36th week | | | | | 20.1 | 18.0 |
| | | | | 39th week | | | | | 19.7 | 18.4 |
| | | | | 42nd week | | | | | 18.1 | 6.6 |
| | | | | 45th week | | | | | 20.1 | |
| | | | | 48th week | | | | | 17.0 | |
| | | | | 51 st week | | | | | 6.5 | |

## Claims

1. A polyolefin composition comprising:
(I) a composition comprising
a) 10-40 wt% of a propylene homopolymer, or a copolymer of propylene with ethylene or a CH₂=CHR α-olefin, where R is a C₂-C₈ alkyl radical, or a copolymer of propylene with ethylene and said CH₂=CHR α-olefin, said copolymers containing over 85wt% of propylene, and having a fraction insoluble in xylene at room temperature greater than 80wt%; and
b) 60-90wt%of one or more copolymers selected from (b1) copolymers of ethylene with propylene, or a CH₂=CHR α-olefin where R is a C₂-C₈ alkyl radical, and (b2) copolymers of ethylene with propylene and said α-olefin, said copolymers containing ethylene in a quantity lower than 40wt% and having solubility in xylene at room temperature greater than 70wt%;
the amounts of (a) and (b) being referred to the total weight of (a) and (b); and
(II) an additives package comprising
(i) one or more organic phosphites and /or phosphonites;
(ii) one or more phenolic antioxidant, consisting of an hindered phenol compound;
(iii) at least two HALS having different molecular weight; and optionally
(iv) one or more epoxidized fatty acid ester.
wherein the ratio (iii)/(ii) is equal to or less than 1; and the weight amount of additives package (II) is from 0.5 to 2wt% referred to the weight of the polyolefin composition.

2. Polyolefin composition according to claim 1, where the additives package (II) is **characterized by** at least one component being low extractable in water based-solvents, which indicates a solubility in water of equal to or less than 0.01 wt%.

3. Polyolefin composition according to claim 1, wherein the heterophasic composition (I) has flexural modulus equal to or less than 150 MPa.

4. A membrane comprising the polyolefin composition according to claim 1.

5. A membrane according to claim 4 for use as a geomembrane.

## Patentansprüche

1. Polyolefinzusammensetzung, umfassend:
(I) eine Zusammensetzung, umfassend:
a) 10-40 Gew.% eines Propylenhomopolymers oder eines Copolymers von Propylen mit Ethylen oder einem α-Olefin CH₂=CHR, wobei R ein C₂-C₈-Alkylrest ist, oder eines Copolymers von Propylen mit Ethylen und dem α-Olefin CH₂=CHR, wobei die Copolymere mehr als 85 Gew.% Propylen enthalten und eine Fraktion, die in Xylol bei Raumtemperatur unlöslich ist, von mehr als 80 Gew. % aufweisen; und
b) 60-90 Gew.% von einem oder mehreren Copolymeren ausgewählt aus (b1) Copolymeren von Ethylen mit Propylen oder einem α-Olefin CH₂=CHR, wobei R ein C₂-C₈-Alkylrest ist, und (b2) Copolymeren von Ethylen mit Propylen und dem α-Olefin, wobei die Copolymere Ethylen in einer Menge unter 40 Gew.% enthalten und eine Löslichkeit in Xylol bei Raumtemperatur von mehr als 70 Gew.% aufweisen;
wobei die Mengen von (a) und (b) sich auf das Gesamtgewicht von (a) und (b) beziehen; und
(II) ein Additivpaket, umfassend:
(i) ein oder mehrere organische Phosphite und/oder Phosphonite;
(ii) ein oder mehrere phenolische Antioxidantien, bestehend aus einer gehinderten Phenolverbindung;
(iii) mindestens zwei HALS mit unterschiedlichem Molekulargewicht; und gegebenenfalls
(iv) einen oder mehrere epoxidierte Fettsäureester,
wobei das Verhältnis von (iii)/(ii) gleich oder kleiner als 1 ist; und die Gewichtsmenge des Additivpakets (II) 0,5 bis 2 Gew.% beträgt, bezogen auf das Gewicht der Polyolefinzusammensetzung.

2. Polyolefinzusammensetzung nach Anspruch 1, wobei das Additivpaket (II) **dadurch gekennzeichnet ist, dass** mindestens eine Komponente in Lösungsmitteln auf Wasserbasis wenig extrahierbar ist, was eine Löslichkeit in Wasser gleich oder kleiner als 0,01 Gew.% zeigt.

3. Polyolefinzusammensetzung nach Anspruch 1, wobei die heterophasische Zusammensetzung (I) einen Biegemodul gleich oder kleiner als 150 MPa aufweist.

4. Membran, umfassend die Polyolefinzusammensetzung nach Anspruch 1.

5. Membran nach Anspruch 4 zur Verwendung als Geomembran.

## Revendications

1. Composition polyoléfinique comprenant :
(I) une composition comprenant
a) 10-40% d'un homopolymère de propylène ou d'un copolymère de propylène avec de l'éthylène ou avec une α-oléfine CH₂=CHR, où R représente un radical C₂-C₈-alkyle, ou d'un copolymère de propylène avec de l'éthylène et ladite α-oléfine CH₂=CHR, lesdits copolymères contenant plus de 85% de propylène et présentant une fraction insoluble dans le xylène à température ambiante supérieure à 80% ; et
b) 60-90% en poids d'un ou de plusieurs copolymères choisis parmi (b1) les copolymères d'éthylène avec du propylène ou avec une α-oléfine CH₂=CHR, R représentant un radical C₂-C₈-alkyle et (b2) les copolymères d'éthylène avec du propylène et ladite α-oléfine, lesdits copolymères contenant de l'éthylène en une quantité inférieure à 40% en poids et présentant une solubilité dans le xylène à température ambiante supérieure à70% en poids ;
les quantités de (a) et (b) se rapportant au poids total de (a) et (b) ; et
(II) un ensemble d'additifs, comprenant
(i) un ou plusieurs phosphites et /ou phosphonites organiques ;
(ii) un ou plusieurs antioxydants phénoliques, constitué(s) par un composé de type phénol encombré ;
(iii) au moins deux HALS (photostabilisant à fonction amine encombrée) présentant des poids moléculaires différents ; et éventuellement
(iv) un ou plusieurs esters d'acide gras époxydés,
le rapport (iii)/(ii) étant égal ou inférieur à 1 ; et la quantité pondérale de l'ensemble d'additifs (II) étant de 0,5 à 2% en poids par rapport au poids de la composition polyoléfinique.

2. Composition polyoléfinique selon la revendication 1, l'ensemble d'additifs (II) étant **caractérisé par** au moins un constituant qui est faiblement extrait dans des solvants à base d'eau, qui présente une solubilité dans l'eau égale ou inférieure à 0,01% en poids.

3. Composition polyoléfinique selon la revendication 1, la composition hétérophasique (I) présentant un module de flexion égal ou inférieur à 150 MPa.

4. Membrane comprenant la composition polyoléfinique selon la revendication 1.

5. Membrane selon la revendication 4 pour une utilisation comme géomembrane.
